# EUROPEAN PATENT SPECIFICATION

(11) **EP 3 250 832 B1**
(45) Date of publication and mention of the grant of the patent: **06.12.2023**
(21) Application number: 16743790.4
(22) Date of filing: 20.01.2016
(51) Int. Cl.: F16B 7/14

(54) **LOCKING ARRANGEMENT FOR TELESCOPIC DEVICES**
VERRIEGELUNGSANORDNUNG FÜR TELESKOPISCHE VORRICHTUNGEN
AGENCEMENT DE VERROUILLAGE POUR DISPOSITIFS TÉLESCOPIQUES

(30) Priority: 31.01.2015 SE 1530009
(43) Date of publication of application: 06.12.2017
(73) Proprietor: FAST IP Handelsbolag, 783 30 Säter (SE)
(72) Inventor: STÅHLE, Fabian, 783 30 Säter (SE)
(74) Representative: Röthinger, Rainer
(86) International application number: PCT/SE2016/050032
(87) International publication number: WO 2016/122378

(56) References cited:
- EP-A1- 2 113 674
- WO-A1-98/08422
- WO-A1-2005/085659
- WO-A1-2009/102260
- WO-A1-2009/102260
- US-B2- 8 491 568

## Description

### TECHNICAL AREA

The invention relates to a locking arrangement interacting with a drive member and including an inner tube and an outer tube; where the inner tube has a first free end that projects from, and is axially displaceable from, a first end of the outer tube; where there is a locking member on the second end of the inner tube, said locking member providing the means whereby the inner tube and the outer tube can be releasably locked in various axial positions relative to each other; where the locking member includes an axially aligned thread and a tubular locking sleeve that is slotted by at least one axially aligned slot, said slot including at least one wedge-shaped cut-out with wedge surfaces; where said locking member further includes at least one wedge that includes wedge surfaces, said wedge surfaces being, when acted upon by a drive member that includes a thread groove, displaceable along and relative to interacting wedge surfaces of said locking sleeve, such displacement pressing the locking sleeve against the outer tube, the inner tube and the outer tube being thereby axially locked relative to each other, said displacement occurring through the drive member being rotated around an axis that is essentially parallel with the longitudinal axis of the inner tube, the thread groove thereby interacting with said thread; and, where the rotation of the drive member occurs via a torsion rod when the torsion rod is rotated, relative to the inner tube, around a longitudinal axis that is essentially parallel with the longitudinal axis of the inner tube.

### TECHNICAL BACKGROUND

For telescopic devices, a locking arrangement that has an inner tube and an outer tube as described above is known from WO2009/102260. This locking arrangement presents many advantages. It has a reliable and easy-to-operate locking function owing to the locking concept with tangentially operating wedges on a locking sleeve offering self-locking properties in one direction without thereby giving rise to self-locking in the regulating wedge. This gives a very strong lock that, at the same time, can be regulated with insignificant force. The locking member is on the end of the inner tube that projects into the outer tube. Regulation is effected by an operating member on the outer tube's free end via a torsion rod that is axially displaceable relative to the locking member. This is a simple design that can be manufactured at low cost. The disadvantage is that said locking arrangement is not self-locking in both directions. Normally, self-locking on compression of the telescopic device is desired. However, in certain applications it may be desirable to have self-locking in both directions. This is the case with, for example, boat hooks when it is desired to exert a pulling force on an object. Another application is walking and ski sticks where, acted on by a spring member, the inner tube can be pushed outwards from the outer tube. In this case, the inner tube is subjected to a pushing force when the locking member is in the locked position. It is thus desirable that the locking member is self-locking in both directions. This can be provided via combining said locking arrangement with known technology as per WO2005/085659 where a locking concept with two axially opposed, tangentially operating wedges is described. In the last-mentioned document, it is described how the locking member is brought between the locked and the open position by these wedges being axially displaced relative to each other. This is effected by a spring-influenced push rod that spontaneously presses the wedges towards each other. Via a force in an axial direction, the spring force can be overcome and the locking member brought into the open position. Owing to this operating principle, the locking member cannot be on the end of the inner tube as said push rod cannot be displaced axially relative to the locking member. In the technology as per WO2009/102260, the locking member is operated by a drive member, which has a thread, being rotated using the torsion rod that is axially displaceable relative to the drive member. This rotation causes the drive member to press the tangentially operating wedge against the locking sleeve. This then expands and, consequently, has a locking effect. If it is desired to operate two axially opposed wedges using the same principle, the problem arises that a twice as long axial displacement of the drive member is required. If the same thread pitch is maintained, this entails a twice as large angular displacement. Thus, the operating member must be rotated twice the angle. This entails the locking member being far more cumbersome to operate. Optimally, operation should be via a compressive force that is provided by the user pressing a thumb against an operating member that is on an operating member on the outer tube's free end. Said document suggests, without detailed description, that this can be achieved using a drive screw that is acted on by a nut, this nut being pressed in an axial direction. The problem with this is that a drive screw requires a steep pitch owing to the friction that opposes the drive movement. However, the steeper the pitch, the smaller the angular displacement. As the user's thumb cannot normally be displaced more than around 20 mm relative to the grip, this cannot be compensated for by a longer axial displacement of the operating member. Similarly, small angular displacement cannot be compensated for by a steeper pitch of the drive member's thread as said member can then unscrew under the influence of a force pulling the inner tube outwards. Another problem for which known technology does not present a solution is how to avoid blocking the drive member's regulation when it is desired to push the inner tube outwards using a spring member. In the case of the proposed arrangement, where rotation is applied to the drive screw using a nut, yet another disadvantage of known technology is the difficulty of providing low-friction bearing of the drive screw with maintained torsional rigidity.

Further prior art is known from WO 98/08422 A1.

### EXPLANATION OF THE INVENTION

One purpose of the present invention is to provide an arrangement that is as per the ingress and gives an easy-to-operate locking function that is self-locking in both directions.

Another purpose is to provide an arrangement as per the ingress that includes a spring member designed to push out the inner tube, said arrangement giving a reliable and easy-to-operate locking function.

Yet another purpose is to provide an arrangement as per the ingress that includes a durable operating arrangement that can be operated via a compressive force from the user's thumb.

These purposes are achieved with a locking arrangement which comprises the features of claim 1. In this locking arrangement, the drive member includes a cylindrical neck, wherein a thread groove is arranged on this neck, and the drive member further includes a flange with a conical end surface that faces the neck.

The invention will now be more closely described with reference being made to the attached drawings, which are intended to explain the invention and not to limit it.
Fig. 1 shows a view, from the front, of a first wedge member.
Fig. 2 shows a cut-away of the wedge member (section A-A) in fig. 1.
Fig. 3 shows the wedge member in fig. 1 in perspective, obliquely from above.
Fig. 4 shows a locking sleeve in perspective, obliquely from above.
Fig. 5 shows a side view of the locking sleeve in fig. 4.
Fig. 6 shows a view, from the front, of the locking sleeve in fig. 4.
Fig. 7 shows a view, from the front, of a second wedge member.
Fig. 8 shows a view, from the side, of the wedge member in fig. 7.
Fig. 9 shows a cut-away of the wedge member (section A-A) in fig. 8.
Fig. 10 shows the wedge member in fig. 7 in perspective, obliquely from above.
Fig. 11 shows a view, from the front, of a drive member.
Fig. 12 shows a view, from above, of the drive member in fig. 11.
Fig. 13 shows a second wedge member, as in figs. 7 - 10, with, mounted therein, a drive member, as in figs. 11 and 12.
Fig. 14 shows a view, from the front, of a spring support.
Fig. 15 shows a view, from above, of the spring support in fig. 14.
Fig. 16 shows a view, from the front, of a locking member as per the invention with the inner tube and the outer tube shown in cut away.
Fig. 17 shows a partly cut-away view, from the side, of the locking member in fig. 16.
Fig. 18 shows a view, from the front, of an outer tube.
Fig. 19 shows a view, from above, of the outer tube in fig. 18.
Fig. 20 shows a partly cut-away view, from the front, of an operating member.
Fig. 21 shows the operating member in fig. 20 in perspective, obliquely from below.
Fig. 22 shows a view, from the front, of a drive screw.
Fig. 23 shows the drive screw in fig. 22 in perspective, obliquely from below.
Fig. 24 shows a view, from the front, of a nut.
Fig. 25 shows a view, from above, of a nut as per fig. 24.
Fig. 26 shows the nut in fig. 24 in perspective, obliquely from above.
Fig. 27 shows a view, from the front, of an operating arrangement.

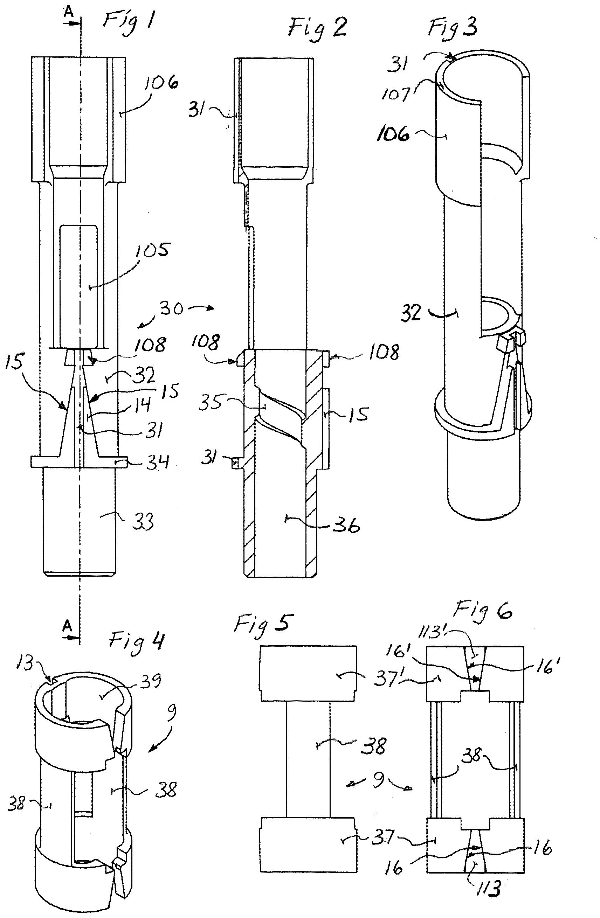

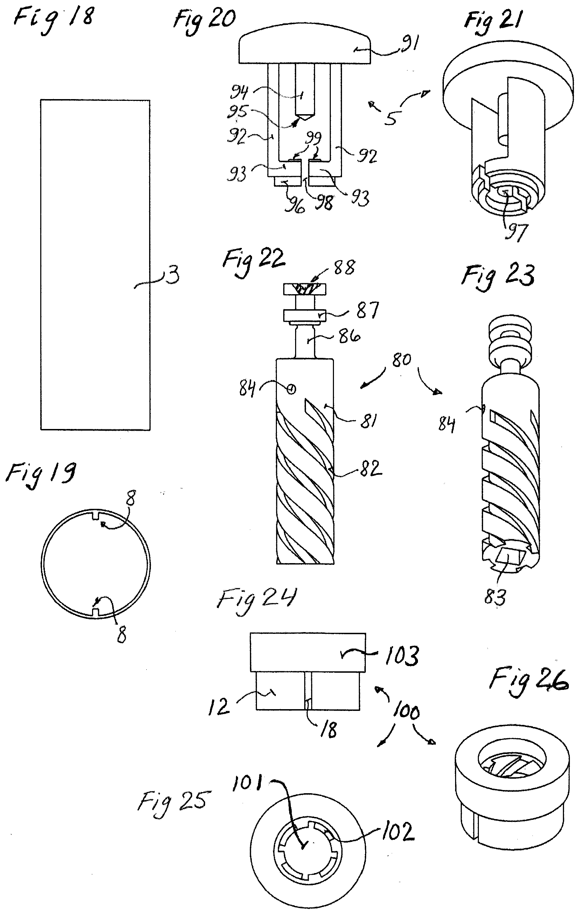

Figures 1 - 3 show a first wedge member (30) designed to interact with a locking sleeve (9) as per figures 4 - 6. Both the wedge member (30) and the locking sleeve (9) are suitably made of a thermoplastic material of a suitable strength and flexibility. The wedge member (30) includes a mounting neck (33) designed to be pushed into one end of an inner tube (1) and fixed there using a known method. The wedge member further includes a stop flange (34) designed to prevent, in interaction with a stop sleeve on one end of an outer tube (3), the wedge member falling out of the outer tube. At its upper part, the stop flange is shaped to form a first wedge (14) with essentially tangentially aligned wedge surfaces (15), said wedge terminating with a stop shoulder (108). At an angle of 180 degrees around the circumference of the guide pin (32), there is yet another stop shoulder (108). Axially aligned guide grooves (31) are recessed in the wedge (14) and the stop flange (34). Said grooves are designed to interact with longitudinal shoulders (8) on the inside of the outer tube (3), as shown in figure 19. Said interaction entails the wedge member being prevented from turning, relative to the outer tube, during axial movements. The wedge (14) is formed as an outgrowth from a cylindrical guide pin (32) that is open at the front and has a cut-out (105) on its reverse, said guide pin stretching from the stop flange (34) up to a sleeve (106) that is open at the front and at the top. This sleeve (106) forms a housing for a second wedge member (30') that has a second wedge (14'). This is described in more detail later on. The sleeve (106) includes an axially aligned guide groove (31) for interacting with shoulders (8) as per the description above. At its upper part, the sleeve terminates with a support surface (107) designed to receive a downwards directed force from a spring member (120). The wedge member (30) is basically cylindrical and has a through-hole (36) in which there is an internal thread (35) with a steep pitch. The locking sleeve (9) is preferably made of a thermoplastic material of a suitable strength and flexibility. The locking sleeve (9) includes two rings with essentially cylindrical locking surfaces (37 and 37'). The longitudinal axes of these rings coincide and the rings are held together at a certain axial distance from each other by a neck (38). For most of its circumference, the neck (38) is discontinuous, two narrow bridges being thereby formed. The purpose of this is to keep the rings with the locking surfaces (37 and 37') axially apart without their being able to have any significant influence upon each other when either of the rings expands radially. The radial influence is effected using a known method, the first wedge (14) being pushed into the wedge-shaped cut-out (113) of the locking sleeve (9) and the second wedge (14') being pushed into the corresponding wedge-shaped cut-out (113'). This displaces the wedge surfaces (15 and 15') of the wedges (14 and 14' respectively) relative to the wedge surfaces (16 and 16') of the locking sleeve (9). The essentially cylindrical locking surfaces (37 and 37') of the locking sleeve (9) thereby increase in diameter.

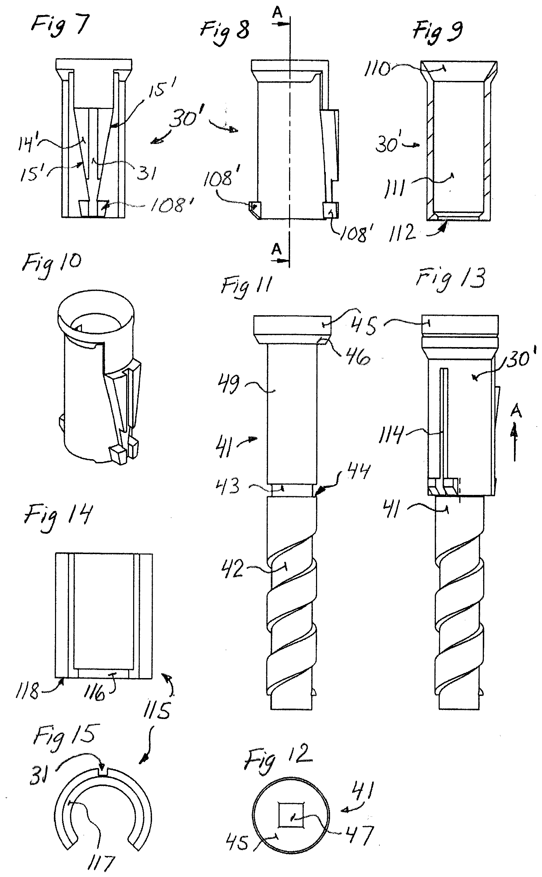

Figures 7-10 show a second wedge member (30') that is preferably made of a thermoplastic material of a suitable strength and flexibility. This wedge member (30') is essentially tubular and has a through-hole (111) that, at its lower part, terminates with an internal flange (112) which has a smaller internal diameter than the hole (111). In the upper part of the wedge member (30'), there is a conical surface (110). On the outside of the wedge member (30'), there is a wedge (14') with essentially tangentially aligned wedge surfaces (15'). An axially aligned guide groove (31) is recessed in said wedge (14'). At its lower part, the wedge (14') terminates with a stop shoulder (108'). On the opposite side of the wedge (14'), 180 degrees around the circumference of the wedge member (30'), said wedge member is partly discontinuous in that it has, as shown in figure 13, a slit (114). Said slit (114) stretches from the lower end piece of the wedge member (30') to just below the conical surface (110). On both sides of the slit (114) and at the lower part of the wedge member (30'), there are stop shoulders (108').

Figures 11 and 12 show a drive member (41) that includes a cylindrical neck (49) with a slightly smaller outside diameter than the through-hole (111) of the wedge member (30'). At the lower part of the neck (49), there is a thread groove (42). Said neck also includes a ring-shaped groove (43) that defines a lower stop surface (44). The outside diameter of the groove (43) is slightly smaller than the inside diameter of the internal flange (112) of the wedge member (30'). The drive member (41) further includes a flange (45), preferably on the upper part of the neck (49), said flange including a conical end surface (46) that has essentially the same angle of convergence as the conical surface (110) of the wedge member (30'). It is preferred that said conical end surface faces the neck (49). Along the longitudinal axis of the drive member, there is a through-hole (47) with a non-circular cross section.

Figure 13 shows how the second wedge member (30') is mounted on the drive member (41). Mounting is effected by the wedge member (30') being fed onto the lower part of the neck (49) of the drive member (41). Said wedge member is then pushed upwards, the slit (114) being thereby widened to allow free passage of said flange (112). When the flange (112) arrives at the groove (43), the flange (112) snaps into the ring-shaped groove (43). The lower axially aligned surface of the flange (112) of the wedge member (30') then rests against the lower stop surface (44) of the drive member (41). The conical surface (110) of the wedge member (30') rests against the conical end surface (46) of the flange (45) of the drive member (41). Both these surfaces (44 and 46) are at such an axial distance that the wedge member (30') can rotate freely on the drive member (41) with a certain axial play that allows said conical surface (110) to rest against said conical end surface (46) when the wedge member (30') is moved relative to the drive member (41) in direction A (see arrow).

Figures 14 and 15 show a spring support (115) in the form of an axially discontinuous cylinder with a lower internal flange (116). Said cylinder's outside diameter is slightly smaller than the inside diameter of the outer tube (23). This flange (116) is designed to form a stop for the end of an axially operating spring member (120), said spring member then resting against a seat (117). The lower axially aligned surface of the spring support (115) defines a contact surface (118) for the force from the spring member (120). The upper part of the spring support (115) is dish-shaped to internally offer a radial support for said spring member. On the outside of the spring support, there is an axially aligned guide groove (31).

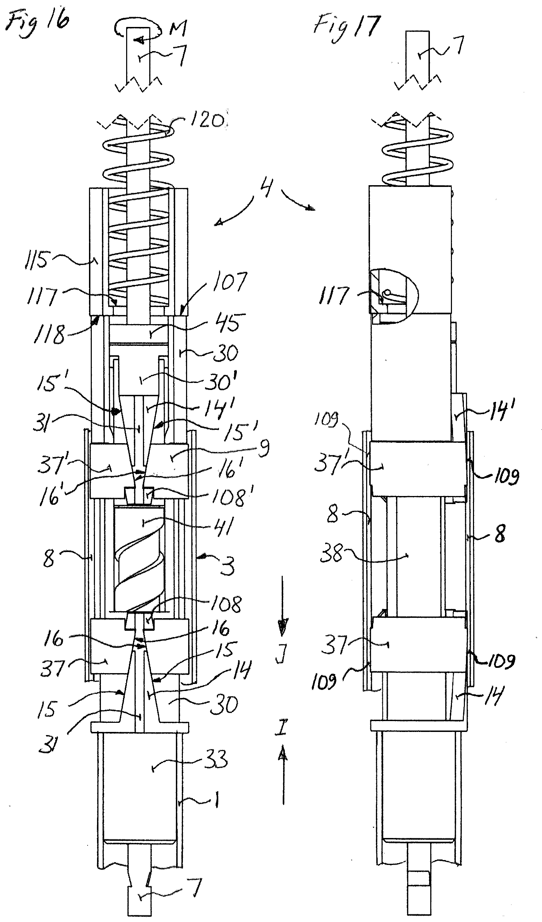

Figures 16 and 17 show a mounted locking member (4) that includes the first wedge member (30). The locking sleeve (9) is fed onto the outside of wedge member 30. This is done from the upper end of the wedge member and over sleeve 106. It is possible because the locking sleeve (9) is flexible and slotted with an axially aligned groove. When the locking sleeve (9) is fed onto the wedge member (30), it is turned so that the wedge-shaped cut-out (113) mates up with the wedge (14) and snaps over the stop shoulders (108). When the locking sleeve (9) is thus in place, the drive member (41), with the second wedge member (30') mounted, is screwed into the thread (35) of the first wedge member (30) so that wedge 14' is pressed into the wedge-shaped cut-out (113') of the locking sleeve (9), said cut-out snapping over the stop shoulders (108'). Figures 16 and 17 show sectioned partial views of the inner tube (1) and the outer tube (3). Not shown in figures 16 and 17, the inner tube (1) has a first free end in direction J (see arrow). The figures show how the second end of the inner tube (1) is fed over the mounting neck (33) of the first wedge member (30) and, using a known method, fixed there. The locking member (4) is then on the second end of the inner tube (1). The inner tube (1) projects from a first end of the outer tube (3). This end is not shown in figures 16 and 17. The outer tube is fed over the locking sleeve (9) and the wedge members (30 and 30'). The outer tube (3) is then turned so that the longitudinal shoulders (8) shown in figure 19 are introduced into the guide grooves (31). The locking member (4) is thereby entirely secured against rotation relative to the outer tube (3). As a result of this securing against rotation, the inner tube (1) is also secured against rotation relative to the outer tube (3). In the mode shown in figures 16 and 17, the locking member (4) is in an unlocked position. Via the drive member (41), wedge member 30' is then screwed out to an outermost position. This position is reached by stop shoulders 108' of wedge member 30' pulling the locking sleeve (9) along with them to the position where further movement of the locking sleeve (9) is prevented by stop shoulders 108 of wedge member 30. In this open position, the outside diameters of the locking surfaces (37 and 37') of the locking sleeve (9) are smaller than the inside diameter of the outer tube, whereby a radial gap (109) arises. The locking member (4), with the thereon mounted inner tube (1), can thus be displaced freely in both axial directions relative to the outer tube (3).

The axial displacement of the wedge members (30 and 30') relative to each other is provided by the drive member (41) being turned around its longitudinal axis. The thread groove (42) on the drive member (41) is then screwed out of or into the thread (35) of wedge member 30. This rotation is provided via the torsion rod (7) introduced into the through-hole (47) of the drive member (41). Said torsion rod has a non-circular cross section that fits into said through-hole with a certain radial clearance so that the drive member (41) can be freely displaced axially relative to the torsion rod (7) and so that the drive member is turned when the torsion rod is turned around its longitudinal axis. When the torsion rod (7) is turned in direction M (see arrow), the drive member (41) is screwed into the first wedge member (30), whereby the second wedge member (30') is displaced axially towards the first wedge member (30). While this is happening, wedge member 30' rotates around the drive member (41). In said axial motion, the wedges (14 and 14') are pressed into the wedge-shaped cut-outs (113 and 113' respectively) of the locking sleeve (9). This increases the radii of the locking surfaces (37 and 37') of the locking sleeve (9) until they come into contact with the inner mantle surface of the outer tube (3). The locking member (4), with the inner tube mounted thereon, is then locked in an axial direction relative to the outer tube (3). When the inner tube (1) is displaced relative to the outer tube (3) in direction I (see arrow), wedge 14 of wedge member 30 is pressed deeper into wedge-shaped cut-out 113 of the locking sleeve (9). The wedge surfaces (15) of wedge 14 are thereby displaced axially in direction I (see arrow) along, and relative to, the interacting wedge surfaces (16) of the locking sleeve (9). This displacement entails the locking surface (37) of the locking sleeve further expanding and, consequently, increasing the locking function. The result is self-locking of the inner tube (1) relative to the outer tube (3) in direction I (see arrow).

When the inner tube (1) is displaced relative to the outer tube (3) in direction J (see arrow), wedge 14' of wedge member 30' is pressed deeper into wedge-shaped cut-out 113' of the locking sleeve (9). The wedge surfaces (15') of wedge 14' are thereby displaced axially in direction J (see arrow) along, and relative to, the interacting wedge surfaces (16') of the locking sleeve (9). This displacement entails, in the same way as above, the locking surface (37') of the locking sleeve further expanding and, consequently, increasing the locking function. The result is self-locking of the inner tube (1) relative to the outer tube (3) in direction J (see arrow).

To provide a certain axial displacement of wedge 14 relative to cut-out 113, the second wedge (14') must be displaced an equivalent distance relative to the corresponding cut-out (113'). This means that the drive member (41) must be displaced a twice as long axial distance relative to wedge member 30. With the thread (35) having a pitch gentle enough to be self-locking, rotation of the torsion rod (7) would have to be so great that it would cause operating problems. Increasing the thread pitch is thus desirable. Such an increase entails no problems with the operating force as all that is required is that the locking surfaces (37 and 37') of the locking sleeve expand to make contact with the inner mantle surface of the outer tube (3). No locking force needs to be applied as the locking effect arises from self-locking. However, a thread pitch that is steep enough to give good operability entails the thread groove (42) not being self-locking in the thread (35). Consequently, the drive member (41) spontaneously unscrews when, relative to the outer tube (3), the inner tube (1) is subjected to a load in direction J (see arrow). The locking function is thereby lost. To solve this problem, the previously explained arrangement with conical surfaces 46 and 110 has been introduced on, respectively, the drive member (41) and the second wedge member (30'). Referring to figure 13, it can be understood that when, relative to the drive member (41), the second wedge member (30') is displaced in direction A (see arrow), friction arises between conical surfaces 46 and 110. With a sufficiently large angle of convergence, this friction can be so great that, despite the steep thread pitch, the drive member (41) does not spontaneously unscrew when, relative to the outer tube (3), the inner tube (1) is subjected to a load in direction J (see arrow and figures 16 and 17). It can be readily understood that the same friction-increasing effect can be provided by having a conical seat in the through-hole (36) of the first wedge member (30), it then being possible for the second wedge member (30') to have a design with an internal thread. Furthermore, conical surfaces 46 and 110 could have a different design, e.g. so that the flange (45) includes a conical concavity on the side that faces the neck (49).

Figures 16 and 17 also show a spring member (120), here in the form of a compression spring. The spring member (120) runs on the inside of the outer tube (3) and can be guided radially by support members. The spring member (120) is preferably radially fixed in the upper part of the outer tube (3) and, at its lower end, rests against a seat (117) on the spring support (115) as per the description above. Said spring support is fixed against rotation relative to the outer tube (3) in such a way that a shoulder (8) on the outer tube (3), as per figure 19, is introduced into the guide groove (31) of the spring support (see figure 15). The spring support (115) can run freely inside the outer tube (3). The force exerted by the spring member (120) on the support surface (107) of the locking member (4) is exercised via the contact surface (118) of the spring support (115). It acts in direction J (see arrow) and in the direction of the said first free end of the inner tube (1). The spring member (120) is of such a length that it acts on the locking member (4) for at least a part of the possible axial displacement distance but, preferably, for all the displacement distance. The inner tube (1) is hereby pushed out from the outer tube (3) when the locking member (4) is put into an unlocked position. It is here of great importance that the forces the spring member (120) exerts on the locking member (4) do not impede operation of the locking member. There are four possibilities for applying the force from the spring member (120); namely, to the drive member (41), to the second wedge member (30') to the locking sleeve (9) or to the locking member (30). To apply said force to the drive member (41) is clearly unsuitable as it would impede turning. However, which of the three other remaining possibilities is the best is not obvious. Practical testing has shown that functionality is best if said force is applied to the first wedge member. However, this is far-fetched as it requires a structure on wedge member 30. Said structure has to build past the upper part of the drive member (41) in order to provide a support surface (107) that can be reached by a spring support's contact surface (118). Essential for good functionality here is that one end of the spring member (120) rests against a seat (117) that, relative to the inner tube (1), is permanently fixed in direction J (see arrow), i.e. in the direction towards said first end of the inner tube (1).

The coil spring shown in the figure can, of course, be replaced by other types of spring member.

Figures 18 and 19 show the outer tube (3) with internal longitudinal shoulders (8) that, interacting with the previously mentioned guide grooves (31), enable the locking member (4) to be secured, relative to the outer tube (3), against rotation. Such securing against rotation can, of course, be provided in other ways, e.g. through longitudinal internal grooves in the outer tube (3) for interaction with longitudinal shoulders included in the locking member (4). The advantage of such an arrangement could be that it would provide better radial guiding of a spring member (120) introduced into the outer tube (3).

Figures 20 and 21 show an operating member (5) suitably made of a thermoplastic material of a suitable strength and flexibility. Said operating member includes a head (91) that is essentially cylindrical with a domed pressure area on its top. Two legs (92) project from the underside of the head (91). Each of the legs (92) has a foot (93). These feet are turned towards each other. Along the centre axis of the head (91), a circular through-hole (98) is recessed in the feet (93). On the underside of the feet (93), there is a tubular guide flange (96). On the upsides of the feet (93), there is a tubular support flange (99). Between the legs (92), there is a cylindrical pin (94). This pin runs from the underside of the head (91) and along said head's centre axis. The underside of said pin terminates in a conical tip (95). In the opening between the feet, there is a gap (98). This divides the hole (97), the guide flange (96) and the support flange (99) each into two halves.

Figures 22 and 23 show a drive screw (80) designed to interact with said operating member and preferably made of a thermoplastic material. The drive screw (80) includes a cylinder (81), the cylindrical mantle surface of which has an external thread (82). It is preferred that the thread has a relatively steep pitch and several starts. Furthermore, compared to the thread groove (42) of the drive member (41), the thread (82) is oppositely oriented so that if the thread groove (42) forms a right thread, the thread (82) constitutes a left thread. The thread shown in the figures has four starts. Along the centre axis of the cylinder (81), there is a blind hole (83) running from a first end of the drive screw (80), i.e. from the underside of the cylinder (81).

Said blind hole is designed to receive the upper end of the torsion rod (7) and suitably has the same, but slightly larger, cross section as the torsion rod (7). Using a known method, the torsion rod (7) can be secured from pulling out of the blind hole (83), e.g. by locking with a screw or pin introduced into a radially aligned hole (84) in the cylinder (81). The drive screw (80) also includes a pin (86). This pin is on the upside of the cylinder (81). The centre axis of said pin coincides with the centre axis of the cylinder (81). The pin (86) further includes a flange (87). This flange is thus on the second end of the drive screw (80). In the centre of the topmost axially aligned surface of the pin (86), there is a recess (88) designed to receive the tip (95) of the operating member (5). When mounting, the pin (86) is inserted into the gap (98) between the feet (93) of the operating member (5). This bends the legs (92) outwards and the pin (86) then snaps into the hole (97) in the operating member (5). The upsides of the feet (93) then hook the flange (87). The support flange (99) of the operating member (5) thereby supports the underside of said flange (87) and the tip (95) of the operating member (5) is introduced into the recess (88) of the pin (86). In this way, the operating member (5) is axially fixed with a certain clearance relative to the drive screw (80). At the same time, the operating member (5) is freely rotatable relative to the drive screw (80).

Figures 24 - 26 show a nut (100). This is preferably made of a thermoplastic material with, in relation to the material used for the drive screw (80), good anti-friction properties. The nut (100) includes a tubular neck (12) that has an outside diameter that is slightly smaller than the inside diameter of the outer tube (3). The neck (12) includes a through-hole (101). In this through-hole, there is an internal thread (102). The design of the thread (102) is such that the thread (82) of the drive screw (80) fits into it with a certain clearance. On the outside of the neck (12) of the nut (100), there are axially aligned grooves (18). The shoulders (8) of the outer tube (3) fit into these grooves. The minimum number of grooves (18) matches the number of shoulders (8). The nut (100) also includes a flange (103) on one end of the neck (12). The outside diameter of this flange is larger than the outside diameter of the neck (12).

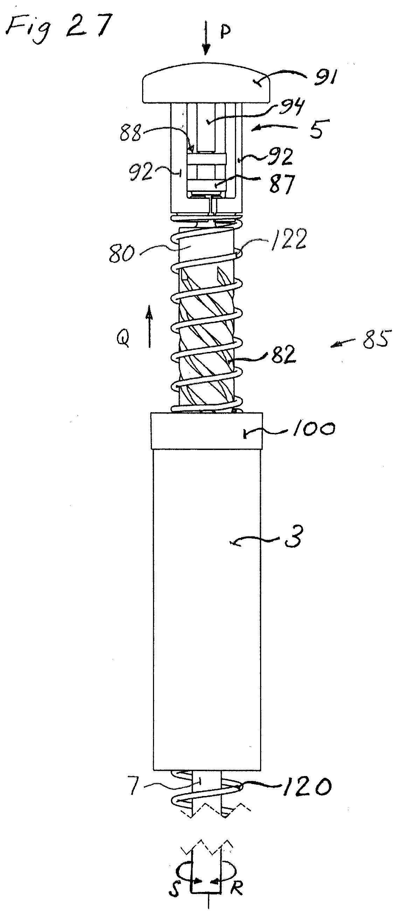

Figure 27 shows a mounted operating arrangement (85) that includes an outer tube (3), a nut (100), a drive screw (80), an operating member (5) and a compression spring (122). The figure further shows parts of a torsion rod (7) and a spring member (120). Mounting is in interaction with a locking member (4) introduced into the outer tube (3) as per figures 16 and 17. In these figures, the outer tube (3) is to be pictured continuing upwards in direction I (see arrow) towards the second end of the outer tube (3), said end being shown in figure 27 and opposite said first end. Preferably stretching from the seat (117) to the underside of the nut (100), the spring member (120) is also introduced into the outer tube (3). When the spring member (120) and the locking member (4) with the thereon mounted inner tube (1) are thus introduced into the outer tube (3), the operating arrangement is suitably mounted by the torsion rod (7) being inserted into the hole (83) of the drive screw (80) and fixed there using a known method. The drive screw (80) is then mounted on the operating member (5) as earlier described and the neck (12) of the nut (100) is fed into said second end of the outer tube (3). At this stage, the nut (100) must not be fixed in the outer tube (3). The next step is to feed the compression spring (122) onto the outside of the drive screw (80) and then slip the torsion rod (7) through the nut (100). The torsion rod must then be inserted into the through-hole (47) of the drive member (41), the thread (82) of the drive screw (80) then being fed into the interacting thread (102) of the nut (100). The guide grooves (18) of the nut (100) then need to be lifted up away from the shoulders (8) of the outer tube (3) so that the drive screw (80), with the nut (100), can rotate freely. The next step is to rotate the torsion rod (7) in direction R (see arrow) using the drive screw (80). The torsion rod is then rotated in direction M (see arrow in figure 16), this bringing the locking member (4) into a locked position as previously described. The nut (100) is then rotated in direction R (see arrow), this screwing the drive screw (80) down into the nut (100) while the compression spring (122) is compressed between the upside of the nut (100) and the underside of the operating member (5). The upper turns of the wire of the compression spring (122) then enclose the guide flange (96) of the operating member (5). In this way, the legs of the operating member (5) are locked so that they cannot be bent outwards from each other, which could cause the feet (93) of the operating member (5) to lose their grip on the flange (87) of the drive screw (80). Finally, the nut (100) is inserted down into the second end of the outer tube (3), the shoulders (8) of the outer tube then fitting into the guide grooves (18) of the nut (100). Using a known method, the nut (100) is then locked to the outer tube (3). So that there are several possibilities for selecting how much the compression spring (122) is to be compressed, it is appropriate for the nut (100) to have several, evenly distributed guide grooves (18).

The thus compressed compression spring (122) exerts, relative to the nut (100) a pushing-away force on the operating member (5) and, thereby, on the drive screw (80) in direction Q (see arrow). This holds the locking member (4) in a locked position with a certain force between the interacting wedges (14 and 14'). When the operating member (5) is pressed in direction P (see arrow) towards the first free end of the inner tube (1), the tip (95) of the operating member (5) presses against the recess (88) of the drive screw (80). Owing to the small radius of the pressure area, the friction torque is very small and, while rotating in direction S (see arrow), the drive screw (80) is pressed down into the nut (100) and, at the same time, the compression spring is further compressed (122). This brings the locking member (4) to an unlocked position and the inner tube (1) is pushed out of the first end of the outer tube (3). As the operating member (5) is released, the compression spring (122) presses the operating member upwards in direction Q (see arrow), the support flange (99) of the operating member then pressing the flange (87) of the drive screw (80) upwards. Owing to the small radius of the pressure area, this friction torque is also very small and, while rotating in direction R (see arrow), the drive screw (80) is pressed up into the nut (100), the locking member (4) being thereby brought back into a locked position. This operation requires the locking member (4) to be secured against rotation relative to the outer tube (3). Providing a practical, more manageable operating arrangement (85) requires a casing around the drive screw (80) and even partly around the legs (92) of the operating member (5), the operator being able to grip said casing when the operating member (5) is acted on by a force in direction P (see arrow). A locking function operated with one hand can thereby be achieved. The operating arrangement (85) described above can, of course, be used to operate other types of telescopic locks. For example, a lock with a locking sleeve (9) with only one locking surface (37) and a wedge-shaped cut-out (113) as described in WO2009/102260 can be imagined. The drive screw (80) being acted on by a torsion spring can also be imagined.

The invention as described and in other design variants that, for professionals in this area, are obviously close thereto is now defined in the following patent claims.

## Claims

1. A locking arrangement including a locking member (4), a torsion rod (7), a drive member (41), an inner tube (1) and an outer tube (3); where the inner tube (1) has a first free end that projects from, and is axially displaceable from, a first end of the outer tube (3); the locking member (4) being arranged on a second end of the inner tube (1), where the inner tube (1) and the outer tube (3) can be releasably locked by said locking member (4), in various axial positions relative to each other; where the locking member (4) includes an axially aligned thread (35) and a tubular locking sleeve (9) that is slotted by at least one axially aligned slot (13) and includes wedge surfaces (16, 16); where said locking member (4) further includes at least a first wedge (14) that includes first wedge surfaces (15, 15), said first wedge surfaces (15, 15) being, when acted upon by the drive member (41) that includes a thread groove (42), displaceable along and relative to the interacting wedge surfaces (16, 16) of said locking sleeve (9), such displacement pressing the locking sleeve (9) against the outer tube (3), the inner tube (1) and the outer tube (3) being thereby axially locked relative to each other, said displacement occurring through the drive member (41) being rotated around an axis that is essentially parallel with the longitudinal axis of the inner tube (1), the thread groove (42) thereby interacting with said thread (35); and, where the rotation of the drive member (41) occurs via the torsion rod (7) when the torsion rod (7) is rotated, relative to the inner tube (1), around a longitudinal axis that is essentially parallel with the longitudinal axis of the inner tube (1),
**characterized in that**
the at least one axially aligned slot (13) of the tubular locking sleeve (9) includes at least one wedge-shaped cut-out (113) which comprises the wedge surfaces (16, 16), and
the drive member (41) includes a cylindrical neck (49) on which the thread groove (42) is arranged, the drive member further including a flange (45) with a conical end surface (46) that faces the neck (49).

2. A locking arrangement as per claim 1, **characterised by** the torsion rod (7) being axially displaceable relative to the drive member (41).

3. A locking arrangement as per claim 1 or 2, **characterised by** the first wedge surfaces (15, 15) being a first pair of wedge surfaces (15, 15) and the locking member (41) including a second wedge (14') that has a second pair of wedge surfaces (15', 15'), where the second pair of wedge surfaces (15', 15') are axially opposed to the first pair of wedge surfaces (15, 15) on the first wedge (14).

4. A locking arrangement as per claim 1, 2 or 3, **characterised by** one end of the torsion rod (7) being secured in a first end of a drive screw (80), said drive screw, when operated, being pressed against the first end of the inner tube (1), whereby the drive screw, interacting with a nut (100), is caused to rotate around its longitudinal axis, the nut (100) being axially fixed relative to the outer tube (3), whereby the torsion rod (7) is also caused to rotate around its longitudinal axis.

5. A locking arrangement as per claim 4, **characterised by** an operating member (5) being interconnected with the drive screw (80) in such a way that the operating member (5) is, relative to the drive screw (80), axially fixed with a certain clearance and is, relative to the drive screw (80), rotatable around said drive screw's longitudinal axis.

6. A locking arrangement as per claim 5, **characterised by** the operating member (5) including two legs (92), each of which has a foot (93), said feet being turned towards each other and the upsides of the feet hooking a flange (87) on the second end of the drive screw (80).

7. A locking arrangement as per claim 5 or 6, **characterised by** there being a compression spring (122) between said operating member (5) and said nut (100) in such a way that, in its compressed state, the compression spring exerts, relative to the nut (100), a pushing-away force on the operating member (5).

## Patentansprüche

1. Verriegelungsanordnung, umfassend ein Verriegelungselement (4), einen Torsionsstab (7), ein Antriebselement (41), ein Innenrohr (1) und ein Außenrohr (3); wobei das Innenrohr (1) ein erstes freies Ende aufweist, das aus einem ersten Ende des Außenrohrs (3) herausragt und bezüglich des ersten Endes axial verschiebbar ist; wobei das Verriegelungselement (4) an einem zweiten Ende des Innenrohrs (1) angeordnet ist, wobei das Innenrohr (1) und das Außenrohr (3) durch das Verriegelungselement (4) in verschiedenen axialen Positionen relativ zueinander lösbar verriegelbar sind; wobei das Verriegelungselement (4) ein axial ausgerichtetes Gewinde (35) und eine rohrförmige Verriegelungshülse (9) aufweist, die durch mindestens einen axial ausgerichteten Schlitz (13) geschlitzt ist und Keilflächen (16, 16) umfasst; wobei das Verriegelungselement (4) ferner mindestens einen ersten Keil (14) umfasst, der erste Keilflächen (15, 15) aufweist, wobei die ersten Keilflächen (15, 15), bei Beaufschlagung durch das Antriebselement (41), das eine Gewindenut (42) aufweist, entlang und relativ zu den zusammenwirkenden Keilflächen (16, 16) der Verriegelungshülse (9) verschiebbar ist, wobei ein solches Verschieben die Verriegelungshülse (9) gegen das Außenrohr (3) drückt, wobei das Innenrohr (1) und das Außenrohr (3) dadurch axial gegeneinander verriegelt sind, wobei die Verschiebung durch Drehung des Antriebselements (41) um eine im Wesentlichen zu der Längsachse des Innenrohrs (1) parallele Achse bewirkt wird, wobei die Gewindenut (42) dadurch mit dem Gewinde (35) zusammenwirkt; und wobei die Drehung des Antriebselements (41) über den Torsionsstab (7) erfolgt, wenn der Torsionsstab (7) relativ zum Innenrohr (1) um eine im Wesentlichen parallel zur Längsachse des Innenrohrs (1) verlaufende Längsachse gedreht wird,
**dadurch gekennzeichnet, dass**
der mindestens eine axial ausgerichtete Schlitz (13) der rohrförmigen Verriegelungshülse (9) mindestens einen keilförmigen Ausschnitt (113) aufweist, der die Keilflächen (16, 16) umfasst, und
das Antriebselement (41) einen zylindrischen Hals (49) aufweist, an dem die Gewindenut (42) angeordnet ist, wobei das Antriebselement ferner einen Flansch (45) mit einer konischen Endfläche (46) aufweist, die dem Hals (49) zugewandt ist.

2. Verriegelungsanordnung nach Anspruch 1, **dadurch gekennzeichnet, dass** der Torsionsstab (7) gegenüber dem Antriebselement (41) axial verschiebbar ist.

3. Verriegelungsanordnung nach Anspruch 1 oder 2, **dadurch gekennzeichnet, dass** die ersten Keilflächen (15, 15) ein erstes Paar von Keilflächen (15, 15) sind und das Verriegelungselement (41) einen zweiten Keil (14') aufweist, der ein zweites Paar Keilflächen (15', 15') aufweist, wobei das zweite Paar Keilflächen (15', 15') axial gegenüberliegend bezüglich des ersten Paars von Keilflächen (15, 15) auf dem ersten Keil angeordnet ist.

4. Verriegelungsanordnung nach Anspruch 1, 2 oder 3, **dadurch gekennzeichnet, dass** ein Ende des Torsionsstabs (7) in einem ersten Ende einer Antriebsschraube (80) befestigt ist, wobei die Antriebsschraube, bei Betätigung, gegen das erste Ende des Innenrohrs (1) gedrückt wird, wodurch die mit einer Mutter (100) zusammenwirkende Antriebsschraube zu einer Rotation um ihre Längsachse veranlasst wird, wobei die Mutter (100) relativ zum Außenrohr (3) axial fixiert ist, wodurch auch der Torsionsstab (7) zu einer Rotation um seine Längsachse veranlasst wird.

5. Verriegelungsanordnung nach Anspruch 4, **dadurch gekennzeichnet, dass** ein Betätigungselement (5) derart mit der Antriebsschraube (80) verbunden ist, dass das Betätigungselement (5) relativ zur Antriebsschraube (80) mit einem gewissen Spiel axial fixiert ist und relativ zur Antriebsschraube (80) um deren Längsachse drehbar ist.

6. Verriegelungsanordnung nach Anspruch 5, **dadurch gekennzeichnet, dass** das Betätigungselement (5) zwei Schenkel (92) aufweist, von denen jeder einen Fuß (93) aufweist, wobei die Füße aufeinander zu gedreht sind und die Oberseiten der Füße einen Flansch (87) am zweiten Ende der Antriebsschraube (80) einhaken.

7. Verriegelungsanordnung nach Anspruch 5 oder 6, **dadurch gekennzeichnet, dass** zwischen dem Betätigungselement (5) und der Mutter (100) eine Druckfeder (122) derart angeordnet ist, dass die Druckfeder in ihrem komprimierten Zustand relativ zur Mutter (100) eine Wegdrück-Kraft auf das Betätigungselement (5) ausübt.

## Revendications

1. Ensemble de verrouillage comprenant un élément de verrouillage (4), une tige de torsion (7), un élément d'entraînement (41), un tube interne (1) et un tube externe (3), le tube interne (1) ayant une première extrémité libre qui fait saillie d'une première extrémité du tube externe (3) et peut se déplacer axialement à partir de cette dernière; l'élément de verrouillage (4) étant disposé sur une seconde extrémité du tube interne (1), dans lequel le tube interne (1) et le tube externe (3) peuvent être verrouillés amovibles par ledit élément de verrouillage (4), dans diverses positions axiales les unes par rapport aux autres; dans lequel l'élément de verrouillage (4) comprend un filetage (35) axialement aligné et un manchon de verrouillage tubulaire (9) qui est pourvu d'au moins une fente axialement alignée (13) et comprend des surfaces en coin (16, 16); dans lequel l'élément de verrouillage (4) comprend en outre au moins un premier coin (14) qui comprend des premières surfaces en coin (15, 15), lesdites premières surfaces en coin (15, 15) pouvant, lorsqu'elles sont actionnées par l'élément d'entraînement (41) qui comprend une rainure filetée (42), se déplacer le long et par rapport aux surfaces en coin (16, 16) en interaction dudit manchon de verrouillage (9), un tel déplacement pressant le manchon de verrouillage (9) contre le tube externe (3), le tube interne (1) et le tube externe (3) étant ainsi verrouillés axialement l'un par rapport à l'autre, ledit déplacement se produisant au moyen de l'élément d'entraînement (41) tourne autour d'un axe qui est sensiblement parallèle à l'axe longitudinal du tube interne (1), la rainure filetée (42) interagissant ainsi avec ledit filetage (35); et, dans lequel la rotation de l'élément d'entraînement (41) se produit au moyen de la tige de torsion (7) lorsque la tige de torsion (7) tourne, par rapport au tube interne (1), autour d'un axe longitudinal qui est sensiblement parallèle à l'axe longitudinal du tube interne (1),
**caractérisé en ce que**
l'au moins une fente alignée axialement (13) du manchon de verrouillage tubulaire (9) comprend au moins une découpe (113) en forme de coin qui comprend les surfaces en coin (16, 16), et
l'élément d'entraînement (41) comprend un col cylindrique (49) sur lequel est disposée la rainure filetée (42), l'élément d'entraînement comprenant en outre un bord (45) avec une face d'extrémité conique (46) qui fait face au col (49).

2. Ensemble de verrouillage selon la revendication 1, **caractérisé par** la tige de torsion (7) qui peut être déplacée axialement par rapport à l'élément d'entraînement (41).

3. Ensemble de verrouillage selon la revendication 1 ou 2, **caractérisé par** les premières surfaces en coin (15, 15) qui sont une première paire de surfaces de coin (15, 15) et l'élément de verrouillage (41) comprenant un second coin (14') qui a une seconde paire de surfaces en coin (15', 15'), la seconde paire de surfaces en coin (15', 15') étant axialement opposée à la première paire de surfaces en coin (15, 15) sur le premier coin (14).

4. Ensemble de verrouillage selon la revendication 1, 2 ou 3, **caractérisé par** une extrémité de la tige de torsion (7) qui est fixée dans une première extrémité d'une vis de commande (80), ladite vis de commande, lorsqu'elle est vissée, est pressée contre la première extrémité du tube interne (1), ce qui permet à la vis de commande, interagissant avec un écrou (100), à être amenée à tourner autour de son axe longitudinal, l'écrou (100) étant fixé axialement par rapport au tube externe (3), ce qui permet à la tige de torsion (7) d'être également amenée à tourner autour de son axe longitudinal.

5. Ensemble de verrouillage selon la revendication 4, **caractérisé par** un élément d'actionnement (5) qui est interconnecté avec la vis de commande (80) de manière à ce que l'élément d'actionnement (5) soit, par rapport à la vis de commande (80), axialement fixé avec un certain jeu et puisse, par rapport à la vis de commande (80) tourner autour dudit axe longitudinal de la vis de commande.

6. Ensemble de verrouillage selon la revendication 5, **caractérisé par** l'élément d'actionnement (5) comprenant deux pattes (92), chacun d'entre elles a un pied (93), ledit pied étant orienté vers l'autre et les côtés supérieurs des pieds accrochant un bord (87) sur la seconde extrémité de la vis de commande (80).

7. Ensemble de verrouillage selon la revendication 5 ou 6, **caractérisé en ce qu'**il existe un ressort de compression (122) entre ledit élément d'actionnement (5) et ledit écrou (100) de manière à ce que, lorsqu'il est compressé, le ressort de compression exerce, par rapport à l'écrou (100), une force de poussée vers l'arrière sur l'élément d'actionnement (5).
